# EUROPÄISCHE PATENTSCHRIFT

(11) **EP 2 399 456 B1**
(45) Veröffentlichungstag und Bekanntmachung des Hinweises auf die Patenterteilung: **06.08.2014**
(21) Anmeldenummer: 11005036.6
(22) Anmeldetag: 21.06.2011
(51) Int. Cl.: A01M 1/14

(54) **Vorrichtung und Verfahren zur Bekämpfung von Insekten**
Method and device for combating insects
Dispositif et procédé de lutte contre les insectes

(30) Priorität: 23.06.2010 DE 102010024710
(43) Veröffentlichungstag der Anmeldung: 28.12.2011
(73) Patentinhaber: Reckhaus AG, 9053 Teufen (CH)
(72) Erfinder: Reckhaus, Hans-Dietrich, 9053 Teufen (CH)
(74) Vertreter: Tostmann, Holger Carl

(56) Entgegenhaltungen:
- CN-Y- 201 430 862
- GB-A- 782 444
- JP-A- 2007 300 890
- US-A- 4 217 722
- US-A1- 2003 049 296
- US-A1- 2007 169 401

## Beschreibung

Die vorliegende Erfindung betrifft eine Vorrichtung und ein Verfahren zur Bekämpfung von Insekten, und insbesondere zur Bekämpfung von Fliegen.

Die erfindungsgemäße Vorrichtung und das erfindungsgemäße Verfahren werden nachfolgend der einfachen Darstellung wegen alleine in Bezug auf die Bekämpfung von Fliegen beschrieben. Es ist jedoch darauf hingewiesen, dass sich die Erfindung auch zur Bekämpfung von anderen Insekten eignet.

Die Fliegen (lateinische Bezeichnung Brachycera) bilden eine Unterordnung der Insekten und genauer eine Unterordnung der zweiflügligen Insekten. Dazu gehören in unseren Breiten Arten wie die echten Fliegen (Muscidae), die für gewöhnlich als Stubenfliegen bezeichnet werden, die Schmeißfliegen (Calliphoridae) oder die Fleischfliegen (Sarcophagidae).

Die Anwesenheit von Fliegen in bewohnten Räumen ist überaus problematisch. Fliegen ernähren sich von allen möglichen toten tierischen und pflanzlichen Substanzen und Verunreinigen mit Resten dieser Substanzen sowie mit ihrem Kot Flächen, die von Menschen berührt werden, aber auch Lebensmittel und dergleichen. Insbesondere können Fliegen aber auch pathogene Keime übertragen und damit Krankheiten bei Menschen und Haustieren verursachen. In Wohnräume eingedrungene Fliegen müssen deshalb möglichst schnell und wirkungsvoll bekämpft werden.

Auf dem Markt sind dafür verschiedene sogenannte Fliegenfallen erhältlich. Eine erste Gruppe dieser Fliegenfallen arbeitet mit Lockstoffen und einem Insektizid. Der Lockstoff und das Insektizid sind auf einer Trägerfolie aufgebracht, die beispielsweise der Abbildung eines Käfers oder eines Schmetterlings entspricht, und die von innen gegen die Scheibe eines Fensters geklebt wird. Die vom Lockstoff angelockten Fliegen setzen sich auf die Oberfläche der Folie und nehmen das dabei für sie tödliche Insektizid auf. Diese Fliegenfallen werden von vielen Benutzern abgelehnt, da damit Insektizid in die Wohnräume eingebracht wird.

Eine zweite Gruppe von sogenannten Fliegenfallen verwendet eine auf beiden Seiten mit einem Klebstoff versehene in der Regel durchsichtige Folie, die gegen die Fensterscheibe geklebt wird. Diese Folie, die z. B. eine Abmessung von 20 x 8 cm haben kann, wird gegen den unteren Rand einer Fensterscheibe geklebt. Fliegen werden bekanntlich vom Licht angezogen. Wenn die Fliege an der Scheibe entlang fliegt, um auf die andere, hellere Seite der Scheibe zu gelangen, bleibt sie an dem auf der Folie befindlichen Klebstoff hängen. Diese Fliegenfalle wird von vielen Verwendern deshalb abgelehnt, da sie den Anblick der getöteten, an der Folie klebenden Fliegen als unangenehm empfinden.

In der US 2003/0049296 A1 wird eine Vorrichtung zur Insektenkontrolle gezeigt, die ungefähr fruchtförmig ist und die eine dreidimensionale Struktur mit offenen Räumen und einer Mehrzahl von Oberflächen innerhalb dieser Struktur hat, wobei diese Oberflächen von Insekten von außerhalb der Struktur direkt kontaktiert werden können.

Es ist deshalb die Aufgabe der vorliegenden Erfindung, eine verbesserte Vorrichtung zum Bekämpfen von Insekten, insbesondere von Fliegen, zur Verfügung zu stellen.

Diese Aufgabe wird patentgemäß durch eine Vorrichtung nach Anspruch 1 und durch ein Verfahren nach Anspruch 9 gelöst. Die zu bevorzugenden Ausführungsformen der Erfindung sind Gegenstand der Unteransprüche.

Die Erfindung lehrt die Verwendung von wenigstens zwei Körpern, die vorzugsweise scheibenförmig gestaltet sind. Am ersten Körper ist eine Wirkfläche ausgebildet, die bevorzugt eine doppelte Funktion aufweist, zum einen dient sie dem Anlocken der Fliegen, und zum anderen werden die Fliegen auf ihr festgehalten. Als Lockmittel wird vorzugsweise Farbe eingesetzt. Beim Testen der Erfindung hat sich herausgestellt, dass Fliegen in besonderer Weise von heller Farbe und ganz besonders von gelber Farbe angezogen werden. Dadurch ist es möglich, auf chemische Lockstoffe zu verzichten.

Der vorgenannte Effekt wird besonders verstärkt, wenn der erste Körper auf einer hellen durchscheinenden Fläche angebracht wird, z.B. auf einer Fensterscheibe, und selbst lichtdurchlässig gestaltet ist. Dazu genügt bereits ein Material mit einem relativ geringen Transmissionsgrad, obwohl auch ein Material mit höherem Transmissionsgrad gut eingesetzt werden kann.

Der zweite Körper dient zunächst dazu, die Wirkfläche des ersten Körpers abzudecken. Da die Wirkfläche des ersten Körpers als Klebeschicht ausgebildet ist, haften die angelockten Insekten darauf fest. Durch die durch den zweiten Körper erreichte Abdeckung werden die gefangenen Insekten den Blicken des Betrachters entzogen. Dazu ist der zweite Körper vorzugsweise so gestaltet, dass er in der Kontur dem ersten Körper so angepasst ist, dass er in der Kontur im Wesentlichen übereinstimmt. Es ist in einer bevorzugten Ausgestaltung aber auch möglich, dass die Kontur des zweiten Körpers in ihren Abmessungen etwas kleiner gestaltet ist als die des ersten Körpers, wodurch der Anlockeffekt verstärkt wird. Ferner ist es gemäß einer weiteren bevorzugten Gestaltung auch möglich, dass die Kontur des zweiten Körpers in ihren Abmessungen etwas größer gestaltet ist, als die des ersten Körpers, wodurch der Effekt der Abdeckung erhöht wird.

Vorzugweise übt der zweite Körper neben der Funktion der Abdeckung eine weitere Funktion aus. Dazu weist er eine Fläche auf, die der Wirkfläche des ersten Körpers zugewandt ist. Diese Fläche ist als lichtreflektierende Fläche ausgebildet. Vorzugsweise geschieht dies durch eine helle Farbgebung dieser Fläche. Es ist jedoch auch zu bevorzugen, die Fläche mit einer metallischen Schicht zu gestalten. Bevorzugt kann auch eine Mischung von einer hellen Farbe und einer Metallschicht verwendet werden, also z.B. eine Farbschicht mit Metalleinsprengseln. Wenn der erste Körper auf einer Fensterscheibe angeordnet ist, bewirkt der lichtreflektierende zweite Körper, dass die Beleuchtung der Wirkfläche mit dem Lockmittel als Farbe verstärkt wird und somit auch die Anziehungskraft für Fliegen erhöht wird.

Besonders bevorzugt werden beide Körper scheibenförmig mit rundem oder rechteckigem Querschnitt gestaltet. In diesem Fall ist beim ersten Körper auf der einen großen Fläche vorzugsweise ein Klebemittel vorgesehen, um den ersten Körper an einer Fensterscheibe zu befestigen. Es sind aber auch andere Befestigungsmöglichkeiten bevorzugt, z.B. eine Befestigung mit Gumminäpfen oder eine Befestigung mit einer beidseitig klebenden Folie. Es ist auch möglich, ein auf der einen Seite klebendes Klettverschlussband anzuordnen und auf dem scheibenförmigen Körper dann ein entsprechend gestaltetes zweites Band, welches an dem ersten Band haftet, vorzusehen bzw. umgekehrt.

Der zweite scheibenförmige Körper weist im Wesentlichen die gleiche Kontur wie der erste Körper auf und ist im Abstand von diesem gehalten. Der Abstand beträgt vorzugsweise zwischen 10 mm und 50 mm und besonders bevorzugt zwischen 10 mm und 30 mm. Als besonders günstiger Wert hat sich ein Wert von 17 mm erwiesen.

Um die beiden scheibenförmigen Körper im Abstand zueinander zu halten, dient die sogenannte Abstandseinrichtung. In bekannter Weise werden als Abstandshalter ein oder mehrere Papier- oder Kartonstreifen eingesetzt, die vorzugsweise mit einer Klebeschicht versehen sind und so gefaltet werden, dass sich der gewünschte Abstand einstellt. Die Papier- oder Kartonstreifen sind dabei bevorzugt so ausgebildet, dass sich durch das Falten eine den Abstand fixierende Rippe oder dergleichen ausformt.

Als Abstandseinrichtung wird erfindungsgemäß ein Saugnapf verwendet, der vorzugsweise aus einem Elastomer gefertigt ist. Dieser Saugnapf wird entweder auf dem ersten Körper platziert oder in einer Öffnung des ersten Körpers auf einer Fläche, auf der der erste Körper angebracht ist, und weist vorzugsweise eine Öffnung auf, in die ein Zapfen eingesteckt wird. Dieser Zapfen ist am zweiten Körper angeordnet.

In einer weiteren bevorzugten Ausführungsform ist die Abstandseinrichtung 3 flexibel gestaltet, so dass der Abstand zwischen dem ersten 1 und zweiten Körper 2 manuell soweit reduziert werden kann, dass bereits klebende und surrende Insekten mechanisch getötet werden können. Die Abstandseinrichtung 3 kann bei dieser Ausführungsform beispielsweise aus einem elastisch rückfedernden Material wie einem Schaummaterial oder aus einer mit einem Saugnapf geringer Höhe verbundenen Spiralfeder hergestellt sein.

Weitere Vorteile, Merkmale und Anwendungsmöglichkeiten ergeben sich aus der nachfolgenden Beschreibung von Ausführungsbeispielen im Zusammenhang mit den Zeichnungen. Darin zeigen:
Figur 1 eine perspektivische Seitenansicht eines ersten Ausführungsbeispiels der erfindungsgemäßen Fliegenfalle;
Figur 2 die Fliegenfalle gemäß Figur 1 in einer schematischen Aufsicht von der Hausseite aus gesehen;
Figuren 3a - 3c verschiedene bekannte Ausführungen von Abstandseinrichtungen;
Figur 4 eine Fliegenfalle mit einem Saugnapf zur Aufnahme der Abdeckscheibe.

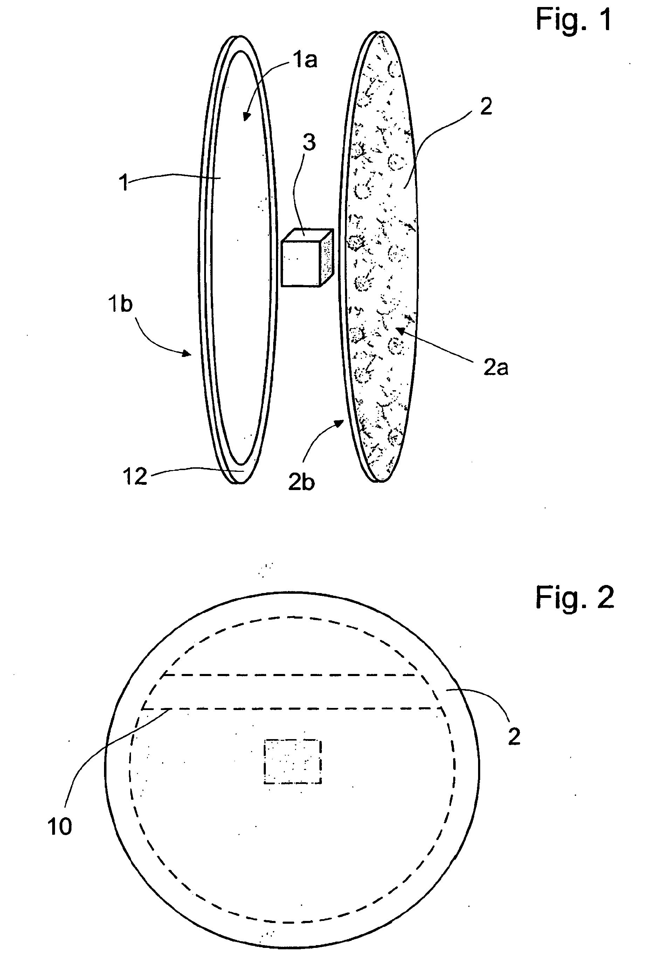

Die Figur 1 zeigt in einer perspektivischen Ansicht und Figur 2 in einer Draufsicht eine erste Ausführungsform der Vorrichtung zur Bekämpfung von Insekten und insbesondere zur Bekämpfung von Fliegen, die auf besonders kostengünstige Weise hergestellt werden kann.

Die Fliegenfalle des Ausführungsbeispiels ist dafür vorgesehen, an der Innenseite einer Fensterscheibe befestigt zu werden.

Die Vorrichtung weist einen ersten Körper 1 auf, der im Ausführungsbeispiel als runde Scheibe mit 120 mm Durchmesser ausgebildet ist. Die Scheibe ist aus

Papier, Karton oder einem Kunststoff, wie z.B. PET angefertigt. Die Verwendung von dünnem Papier und/oder insbesondere die Verwendung einer PET-Folie hat den Vorteil, dass der erste Körper lichtdurchlässig gestaltet werden kann, wobei vorzugsweise ein Transmissionsgrad von über 5 %, besonders bevorzugt von über 25 % erreicht wird.

Auf der fensterseitigen Rückseite 1 b ist ein Klebestreifen 10 vorgesehen. Dieser Klebestreifen ist als doppelseitiges Klebeband gestaltet und haftet mit seiner einen Seite am ersten Körper 1 und - nach Abzug einer Abdeckfolie - mit seiner Rückseite an der - nicht dargestellten - Fensterscheibe.

Der Klebestreifen ist etwa im oberen Drittel des ersten Körpers angeordnet und ist im Ausführungsbeispiel etwa im Abstand von 30 mm vom oberen Rand des ersten Körpers 1 angeordnet.

Die raumseitige Fläche 1 a des ersten Körpers 1, die Wirkfläche, ist mit einem gelben Farbton gestaltet, und zwar vorzugsweise mit einem Farbton gemäß RAL 1023. Dieser Farbton hat sich in Versuchen als besonders geeignet erwiesen, um Fliegen anzuziehen.

Auf der gelben Farbschicht ist eine Klebeschicht angebracht, die an der Luft nicht austrocknet und ihre Klebefähigkeit über viele Wochen behält. Diese Klebeschicht ist auf die gesamte gelbe Fläche aufgetragen, mit Ausnahme eines kleinen Randbereiches 12. Im Auslieferungszustand ist die Klebeschicht mit einer Abdeckfolie, vorzugsweise einem Silikonpapier, abgedeckt. Da der genannte kleine Randbereich 12 nicht mit einer Klebeschicht bedeckt ist, kann die Folie vom Benutzer auf einfache Weise von dem ersten Körper 1 abgezogen werden.

Statt dieses umlaufenden Randbereichs ist es auch bevorzugt, eine Fläche in einem Teilbereich am Rand frei von der Klebeschicht zu lassen. Im geometrischen Sinn wird diese Fläche vorzugsweise durch eine Sekante begrenzt.

Im Abstand zum ersten Körper 1 ist der zweite Körper 2 angeordnet. Der zweite Körper besteht bei diesem Ausführungsbeispiel aus Papier und ist auf seiner fensterseitigen Fläche 2b mit einer stark lichtreflektierenden Schicht bedruckt. Vorzugsweise ist die Schicht weiß oder silberfarbig.

Der Durchmesser des zweiten Körpers 2, der ebenfalls kreisförmig gestaltet ist, ist 140 mm. Damit überschreitet er den Durchmesser des ersten Körpers um 20 mm, so dass bei der bei diesem und den anderen Ausführungsbeispielen der vorgesehenen konzentrischen Anordnung der beiden Körper, die Kontur des zweiten Körpers umlaufend um 10 mm über die des ersten Körpers hervorsteht. Dadurch wird erreicht, dass die Wirkfläche 1 a des ersten Körpers 1 vom Rauminneren im Wesentlichen nicht zu sehen ist und der Einblick der an der Klebefläche klebenden Fliegen den Augen des Betrachters entzogen ist.

Die dem Haus zugewandte Seite 2a des zweiten Körpers 2 ist mit einem Dekormotiv bedruckt, beim Ausführungsbeispiel ist dies ein Blumenmotiv. Selbstverständlich kommen alle Arten von Dekormotiven für die Bedruckung dieser Scheibe in Frage.

Zwischen dem ersten und zweiten Körper befindet sich eine Abstandseinrichtung 3.

Diese ist bei diesem Ausführungsbeispiel als einfacher Papierwürfel gestaltet, dessen Kantenlänge ca. 17 mm beträgt, so dass die beiden Körper 1, 2 einen Abstand zueinander von 17 mm aufweisen.

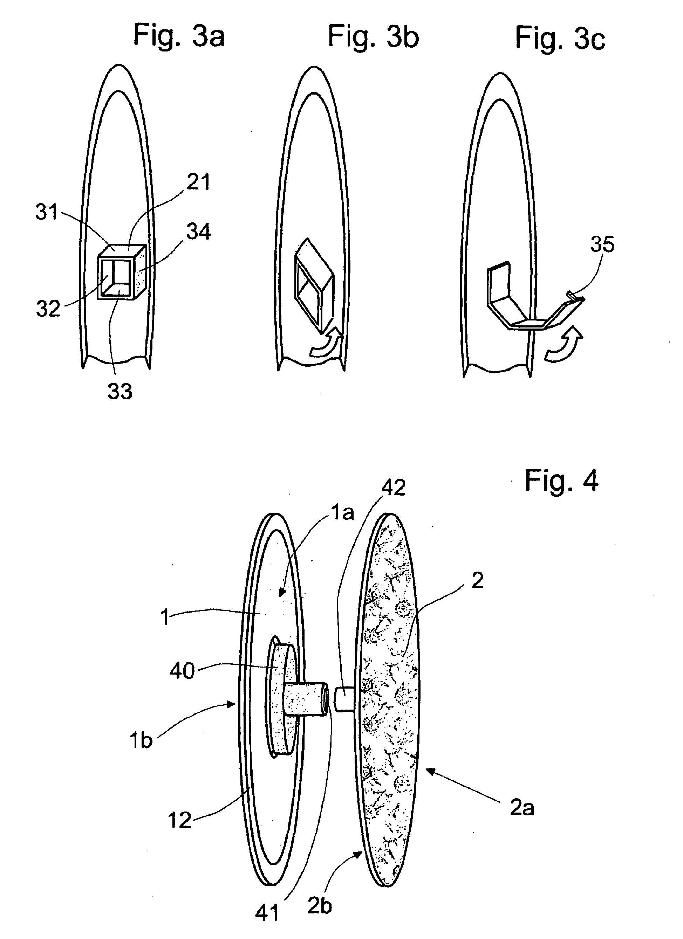

In den Figuren 3a, 3b und 3c sind beispielhaft Abstandseinrichtungen eingestellt. Figur 3a zeigt eine Abstandseinrichtung 21, die aus vier miteinander verbundenen Papierstreifen mit den Seitenflächen 31, 32, 33 und 34 besteht.

Ein solcher Papierwürfel oder Quader kann einer Verkaufsverpackung der Fliegenfalle in dieser Form beigefügt werden. Es ist jedoch auch möglich, wie in Figur 3b gezeigt, einen solchen Quader rautenförmig zusammenzufalten. Er nimmt dann in der Verpackung nur wenig Platz ein. Zum Gebrauch wird die Raute in die rechtwinklige Form gebracht und der zweite Körper auf nun den gewünschten Abstand herstellende Raute aufgeklebt.

Im Ausführungsbeispiel in Figur 3c ist ein Papierstreifen gezeigt, der im Anlieferungszustand bereits vorgefalzt ist und vom Benutzer in die in Figur 3a gezeigte Form gefaltet wird und durch einen Klebestreifen und/ oder Lasche 35 in seiner endgültigen Form gehalten wird.

Das Ausführungsbeispiel gemäß Figur 4 zeigt eine Abwandlung des Ausführungsbeispiels gemäß Figuren 1 - 3. Aus Gründen der Vereinfachung werden nur die Teile beschrieben, die von dem vorstehend beschriebenen Ausführungsbeispiel abweichen.

Bei diesem Ausführungsbeispiel ist der erste Körper mit einer konzentrisch angeordneten runden Öffnung versehen. Beim Aufkleben auf dem Fenster bleibt somit diese Fläche frei. In die freie Fläche wird ein Saugnapf 40 auf die Fensterfläche geklebt, der beim Ausführungsbeispiel rund gestaltet ist und einen Durchmesser von 32 mm aufweist. Im Saugnapf 40 ist eine Öffnung 41 vorgesehen, in die ein Zapfen 42 eingreift, der im Mittelpunkt der ebenfalls wiederum kreisförmigen Gestaltung des zweiten Körpers, die wiederum als Dekorscheibe ausgebildet ist, angebracht ist. Bei dieser Ausführungsform ist der Zapfen 42 ist vorzugsweise als Mehrkant, z. B. sechskantförmig ausgebildet, um ein Entweichen der in der Öffnung 41 befindlichen Luft beim Einführen des Zapfens 42 zu ermöglichen:

Die Funktion der beschriebenen Ausführungsbeispiele ist wie folgt:
Die Fliegenfalle, wie sie im Ausführungsbeispiel gemäß den Figuren 1 ― 3 dargestellt ist, wird in einer flachen Verpackung geliefert, in der ein oder mehrere erste Körper 1, zweite Körper 2 und Abstandseinrichtungen 3 enthalten sind.
Der Benutzer entfernt die Abdeckung des Klebestreifens 10 eines ersten Körpers 1 und klebt den ersten Körper 1 gegen die Fensterscheibe. Dabei wird er bevorzugt den unteren Rand der Fensterscheibe auswählen, wobei besonders bevorzugt die linke oder rechte untere Ecke des Fensters auszuwählen ist. Die gelbe Seite ist dann dem Rauminneren zugewendet. Da der erste Körper 1 aus einem Material besteht, das lichtdurchlässig ist, wird die Wirkung der gelben Farbe durch den Lichtdurchfall durch den ersten Körper verstärkt.

Anschließend wird die Abstandseinrichtung 3 montiert und die Dekorscheibe aufgesetzt. Da die Dekorscheibe, der zweite Körper 2, im Abstand von der ersten Scheibe gehalten ist, fällt das durch das Fenster eintretende Licht auch auf die Dekorscheibe. Von dort wird es auf die gelbe Fläche des ersten Körpers reflektiert, wodurch dessen Lichtabstrahlung noch weiter erhöht wird. Es ist bekannt, dass Fliegen durch helles Licht angezogen werden. Bei Versuchen hat sich nun herausgestellt, dass die Anziehungskraft von gelber Farbe, und insbesondere von gelber Farbe die dem RAL-Farbton 1023 entspricht oder diesem nahe kommt, die Fliegen besonders anzieht.

Die Fliegen fliegen zunächst in Richtung des ― im Vergleich zum Raum - helleren Fensters und werden dort von der gelben, durch das Licht von vorne und hinten beleuchteten, Scheibe, dem ersten Körper 1 besonders angezogen. Dadurch werden die Fliegen veranlasst, wie Versuche gezeigt haben, in den vergleichsweise breiten Spalt zwischen Dekorscheibe, dem zweiten Körper 2 und der Wirkfläche des ersten Körpers 1 hineinzufliegen und sich auf die gelbe Fläche 1a zu setzen. Dabei werden sie durch den Klebstoff festgehalten. In den Versuchen hat sich gezeigt, dass der Anlockeffekt der gelben Fläche in dieser Konstellation besonders wirkungsvoll ist. Es wird deshalb vorsorglich darauf hingewiesen, dass für die Gestaltung, nämlich ein semitransparenter scheibenförmiger Körper, der auf eine Fensterscheibe aufgeklebt wird und dessen Raumseite mit einer gelben Farbe versehen ist, die dem Farbton RAL 1023 entspricht oder diesem ähnlich ist, und auf dem eine Klebeschicht zum Fangen von Insekten angeordnet ist, ggf. gesondert Schutz beansprucht wird, d.h. unabhängig von der Verwendung des zweiten Körpers, der der Abdeckung des ersten Körpers dient.

Ferner ist zu verstehen, dass es das besondere Anliegen der Erfindung ist, die Fliegenfalle ohne chemische Lockstoffe und ohne Stoffe mit insektizider Wirkung zu gestalten. Damit ist die Verwendung dieser Fliegenfalle auch für solche Benutzer möglich, die die Anwendung derartiger chemischer Substanzen in ihren Wohnräumen ablehnen.

Es ist jedoch zu verstehen, dass für die Verwendung durch solche Benutzer, die keine Bedenken haben, einen derartigen chemischen Lockstoff und/oder ein Insektizid in Wohnräumen zu verwenden, es im Rahmen der Erfindung möglich ist, zusätzlich zur Lockwirkung der Farbe des ersten Körpers und insbesondere der gelben Farbe nach RAL 1023 oder einem diesen ähnlichen Farbton, ein Lockmittel einzusetzen. Ferner ist es im Rahmen der Erfindung auch möglich, zusätzlich zur Wirkung der Klebeschicht ein Insektizid im Klebebereich vorzusehen.

Die Funktion des Ausführungsbeispiels gemäß Figur 4 entspricht im Wesentlichen der Funktion des Ausführungsbeispiels gemäß Figuren 1 ― 3. Im Unterschied zu diesem Ausführungsbeispiel weist der erste Körper jedoch dort das konzentrische Loch auf. Infolge dieser Öffnung kann der Saugnapf 40 unmittelbar auf der Fensterscheibe befestigt werden. Um diesen Saugnapf herum wird dann die Dekorscheibe auf der Fensterscheibe platziert.

Bei diesem Ausführungsbeispiel werden vorzugsweise in einer Verkaufsverpackung ein Saugnapf und eine Dekorscheibe (zweiter Körper 2), aber mehrere erste Körper1 mit der Klebefläche angeliefert. Der Benutzer kann dann, wenn genügend Fliegen gefangen worden sind, die gelbe Scheibe (erster Körper 1 ) gegen eine neue Scheibe austauschen. Es ist jedoch auch möglich, ein anderes Befestigungsmittel zum lösbaren Fixieren des ersten Körpers 1 auf der Fensterscheibe zu verwenden, wie beispielsweise einen Klettverschluss.

## Patentansprüche

1. Vorrichtung zur Bekämpfung von Insekten und insbesondere zur Bekämpfung von Fliegen mit
einem ersten, vorzugsweise scheibenförmig ausgebildeten Körper (1), einem zweiten, vorzugsweise scheibenförmigen ausgebildeten Körper (2),
einer Abstandseinrichtung (3), welche bewirkt, dass der erste Körper (1) und der zweite Körper (2) in einem im Wesentlichen vorgegebenen Abstand zueinander gehalten sind,
wobei der erste Körper (1) wenigstens eine Wirkfläche (1 a) aufweist, die dem zweiten Körper (2) zugewandt ist und auf der wenigstens ein Lockmittel angeordnet ist, um Insekten auf diese Wirkfläche (1a) anzulocken, wobei die Wirkfläche (1) weiterhin wenigstens teilweise mit einem Klebematerial versehen ist, um angelockte Insekten dort festzuhalten, wobei
die Abstandseinrichtung (3) aus wenigstens zwei Elementen besteht, **dadurch gekennzeichnet, dass** das erste Element ein Saugnapf (4) ist, der mit wenigstens einem zweiten Element zusammenwirkt, wobei das zweite Element vorzugsweise einen Zapfen (42) aufweist, der in eine vorzugsweise im Saugnapf (40) angeordnete Öffnung (41) eingreift.

2. Vorrichtung gemäß Anspruch 1,
**dadurch gekennzeichnet, dass**
dieses Lockmittel eine Lockfarbe ist, die auf dieser Wirkfläche (1 a) angeordnet ist, wobei diese Lockfarbe insbesondere eine helle Farbe ist und besonders bevorzugt einen gelblichen Farbton aufweist, der RAL 1023 entspricht bzw. diesem ähnlich ist.

3. Vorrichtung gemäß Anspruch 1 oder 2,
**dadurch gekennzeichnet, dass**
diese Abstandseinrichtung (3) den ersten und den zweiten Körper in einem wesentlichen konstanten Abstand hält, der vorzugsweise zwischen 10 mm und 50 mm, besonders bevorzugt zwischen 10 mm und 30 mm und ganz besonders bevorzugt 17 mm beträgt.

4. Vorrichtung gemäß mindestens einem der Ansprüche 1 bis 3,
**dadurch gekennzeichnet, dass**
dieser zweite Körper (2) wenigstens eine erste Fläche (2b) aufweist, welche wenigstens einer der Wirkflächen (1 a) des ersten Körpers (1) zugewandt ist, und welche aus einem Material mit guter Lichtreflexion besteht, welche vorzugsweise als helle, insbesondere als weiße Farbschicht oder als metallische Schicht ausgebildet ist.

5. Vorrichtung gemäß mindestens einem der Ansprüche 1 bis 4,
**dadurch gekennzeichnet, dass**
der erste Körper (1) neben den Wirkflächen wenigsten eine weitere Fläche aufweist, auf der wenigstens teilweise ein Funktionselement (10) angeordnet ist, mit der der erste Körper (1) an einer Fläche, insbesondere an einer Fensterfläche befestigbar ist.

6. Vorrichtung gemäß mindestens einem der Ansprüche 1 bis 5,
**dadurch gekennzeichnet, dass**
dieser zweite Körper (2) wenigstens eine weitere Fläche (2a) aufweist, die vorzugsweise von der Wirkfläche (2b) des zweiten Körpers (2) abgewandt ist und welche als Dekorationsfläche ausgebildet ist.

7. Vorrichtung gemäß mindestens einem der Ansprüche 1 bis 6,
**dadurch gekennzeichnet, dass** der erste Körper (1) wenigstens teilweise lichtdurchlässig gestaltet ist, so dass die Wirkfläche (1a) beim Anbringen auf einer Fensterfläche von dem von außen auf die Fensterfläche fallenden Licht aufgehellt ist.

8. Verfahren zur Bekämpfung von Insekten, insbesondere von Fliegen,
**dadurch gekennzeichnet, dass**
eine erste, zumindest teilweise transparente Scheibe (1) zur Verfügung gestellt wird, welche auf der dem Raum zugewandten Seite eine Wirkfläche (1a) mit einer hellen, dem Anlocken von Insekten dienende Lockfarbe aufweist, und auf der ferner eine Klebeschicht angeordnet ist, die auf die Wirkfläche fliegende Insekten festhält und dass ferner eine zweite Scheibe (2) vorgesehen ist, die im Abstand zur ersten Scheibe gehalten ist, und die der optischen Abdeckung der ersten Scheibe mit den darauf festgehaltenen Insekten dient.

## Claims

1. Device for combatting insects and in particular for combatting flies with a first, preferably disk-shaped body (1), a second, preferably disk-shaped body (2),
a distance means (3) which causes that the first body (1) and the second body (2) are kept in a substantially predetermined distance from one another,
wherein the first body (1) has at least one functional surface (1 a) which faces the second body (2) and on which at least one attractant is arranged in order to attract insects to this functional surface (1 a), wherein the functional surface (1) further is provided at least partially with an adhesive material to adhere attracted insects thereon, wherein
the distance means (3) comprises at least two elements, **characterized in that**
the first element is a suction cup (40) which cooperates with at least one second element, wherein the second element preferably has a pin (42) which engages in an aperture (41) preferably disposed in the suction cup (40).

2. Device according to claim 1,
**characterized in that**
this attractant is an attracting color disposed on this functional surface (1a), said attracting color is in particular a light color, and more preferably has a yellowish hue, corresponding to or similar to RAL 1023.

3. Device according to claim 1 or 2,
**characterized in that**
the distance means (3) keeps the first and the second body at a substantially constant distance, which is preferably between 10 mm and 50 mm, more preferably between 10 mm and 30 mm and most preferably is 17 mm.

4. Device according to any one of claims 1 to 3,
**characterized in that**
the second body (2) comprises at least a first surface (2b) which faces at least one of the functional surfaces (1a) of the first body (1), and which consists of a material with good light reflectance, which is preferably formed as a light, particularly as a white coating or formed as a metallic layer.

5. Device according to any one of claims 1 to 4,
**characterized in that**
the first body (1) in addition to the functional surfaces has at least one further surface, at which at least in part a functional element (10) is arranged, with which the first body (1) is attachable at a surface, in particular at a window surface.

6. Device according to any one of claims 1 to 5,
**characterized in that**
said second body (2) comprises at least one further surface (2a), which preferably is averted from the functional surface (2b) of the second body (2), and which is designed as a decorative surface.

7. Device according to any one of claims 1 to 6,
**characterized in that**
the first body (1) is designed at least partially translucent, so that the functional surface (1 a) is brightened when applied to a window area by the light falling on the outside surface of the window.

8. A method for combatting insects, in particular flies,
**characterized in that**
a first, at least partially transparent disc (1) is provided, which on the room-facing side has a functional surface (1 a) with a light attracting color, serving for the attraction of insects, and on which further an adhesive layer is arranged which adheres insects flying at the functional surface, and further a second disc (2) is provided, which is kept at a distance from the first disk, and which serves for optical covering the first disc and the insects held thereon.

## Revendications

1. Dispositif de combat d'insectes et en particulier de combat des mouches avec un premier corps formé de préférence comme un plateau (1), un deuxième corps formé de préférence comme un plateau (2),
un dispositif d'écartement (3) qui fait que le premier corps (1) et le deuxième corps (2) sont maintenus à un certain écartement essentiellement prédéterminé l'un par rapport à l'autre,
le premier corps (1) présentant au moins une surface active (1a) tournée vers le deuxième corps (2) et sur lequel est agencé au moins un appât, destiné à appâter des insectes sur ladite surface active (1a), la surface active (1 a) étant en outre revêtue au moins partiellement d'un matériau adhésif, pour y coller les insectes appâtés, le dispositif d'écartement (3) étant constitué d'au moins deux éléments,
**caractérisé en ce que**
le premier élément est une ventouse (40) qui coopère avec au moins un deuxième élément, le deuxième élément présentant de préférence un pivot (42) qui s'engage dans une ouverture (41) ménagée de préférence dans la ventouse (40).

2. Dispositif selon la revendication 1,
**caractérisé en ce que**
cet appât est une peinture d'appât qui est appliquée sur cette surface active (1a), cette peinture d'appât étant en particulier une peinture claire et qui présente de manière particulièrement préférée un coloris jaunâtre correspondant à RAL 1023 ou qui y est semblable.

3. Dispositif selon la revendication 1 ou 2,
**caractérisé en ce que**
ce dispositif d'écartement (3) maintient le premier et le deuxième corps à un écartement en prépondérance constant qui est de préférence entre 10 mm et 50 mm, de manière préférée entre 10 mm et 30 mm, et de manière particulièrement préférée de 17 mm.

4. Dispositif selon au moins l'une des revendications 1 à 3,
**caractérisé en ce que**
ce deuxième corps (2) présente au moins une première surface (2b) qui est tournée vers au moins une surface active (1a) du premier corps (1), et qui est constituée d'un matériau à bonne réflexion lumineuse, formé de préférence par une couche claire, en particulier en tant que couche de peinture blanche ou que couche métallique.

5. Dispositif selon au moins l'une des revendications 1 à 4,
**caractérisé en ce que**
outre la surface active, le premier corps (1) présente au moins une surface supplémentaire sur laquelle est agencé au moins partiellement un élément fonctionnel par lequel le premier corps (1) peut être fixé sur une surface, en particulier sur une surface de fenêtre.

6. Dispositif selon au moins l'une des revendications 1 à 5,
**caractérisé en ce que**
ce deuxième corps (2) présente au moins une surface supplémentaire (2a) qui est de préférence détournée de la surface active (2b) du deuxième corps (2) et qui est conçue comme surface de décoration.

7. Dispositif selon au moins l'une des revendications 1 à 6,
**caractérisé en ce que**
la premier corps (1) est au moins partiellement transparent, de sorte que lors de la pose sur une surface de fenêtre, la surface active (1a) soit éclaircie par la lumière qui tombe de l'extérieur sur la fenêtre.

8. Procédé de combat d'insectes, en particulier de combat de mouches
**caractérisé en ce qu'**
est mis à disposition un premier plateau au moins partiellement transparent qui présente, sur le côté qui est tourné vers la pièce, une surface active (1a) ayant une peinture d'appât claire qui sert à attirer des insectes et sur laquel est en outre agencée une couche adhésive qui maintient les insectes sur la surface active et **en ce qu'**est prévu en outre un deuxième plateau (2) qui est maintenu écarté du premier plateau et qui sert au recouvrement optique du premier plateau et des insectes qui y sont collés.
